# EUROPÄISCHE PATENTANMELDUNG

(11) **EP 2 327 291 A1**
(43) Veröffentlichungstag der Anmeldung: **01.06.2011**
(21) Anmeldenummer: 09450223.4
(22) Anmeldetag: 25.11.2009
(51) Int. Cl.: A01F 25/16

(54) **Vorrichtung zur Silierung von Pflanzenmaterial**

(71) Anmelder: Sattler AG, 8041 Graz (AT)
(72) Erfinder: Wiedau, Helmut, 48161 Münster (DE)
(74) Vertreter: Ellmeyer, Wolfgang

(57) **Zusammenfassung**

Vorrichtung zur Silierung von Pflanzenmaterial, wobei ein flüssigkeitsdichtes Becken (1) mit einer Beckensohle (14) und Beckenwänden (10, 11, 12, 13) vorgesehen ist, und dass in der Beckensohle (14) zumindest ein nach oben hin zumindest teilweise offener Sammelkanal (2) vorgesehen ist, der in eine Pump-Vertiefung (3) mündet, aus welcher dort sich ansammelndes Gemisch aus Flüssigkeit und Pflanzenmaterial abpumpbar bzw. förderbar ist.

## Beschreibung

Die Erfindung betrifft eine Vorrichtung zur Silierung von Pflanzenmaterial.

Silierung bietet die Möglichkeit der Konservierung nachwachsender Rohstoffe, die z.B. in weiterer Folge durch Fermentation die Erzeugung von Biogas ermöglichen.

Beim Silierprozess wird im Siliergut enthaltener Zucker oder Stärke durch Bakterien in Milchsäure und in Essigsäure umgewandelt.

Bisher bekannte Verfahren wenden das Umwickeln von Rundballen mittels Folien an, um den luftdichten Abschluss für die Silage zu gewährleisten.

Bei größeren Mengen ist dieser Wickelvorgang mit einem sehr hohen Material- und Arbeitsaufwand verbunden.

Aufgabe der Erfindung ist daher eine Vorrichtung zur Silierung der eingangs genannten Art anzugeben, welche für die Konservierung von großen Mengen an Pflanzenmaterial geeignet ist.

Aufgabe der Erfindung ist es weiters, eine Vorrichtung zu schaffen, deren Errichtung und deren Betrieb mit geringem Arbeits- und Materialaufwand möglich ist.

Erfindungsgemäß wird dies dadurch erreicht, dass ein flüssigkeitsdichtes Becken mit einer Beckensohle und Beckenwänden vorgesehen ist, und dass in der Beckensohle zumindest ein nach oben hin zumindest teilweise offener Sammelkanal vorgesehen ist, der in eine Pump-Vertiefung mündet, aus welcher dort sich ansammelndes Gemisch aus Flüssigkeit und Pflanzenmaterial abpumpbar bzw. förderbar ist.

Durch die Befüllung des Beckens mit Pflanzenmaterial wird dieses durch das Eigengewicht des aufgehäuften Pflanzenmaterials verdichtet und zugleich auch luftdicht abgeschlossen, wodurch die Milchsäureproduktion und somit die Konservierung des Pflanzenmaterials gefördert wird. Nach oben hin benötigt das Becken keine Abdeckung und das Pflanzenmaterial muss auch nicht mit einer Folie umhüllt werden. Im Becken entstehende Flüssigkeit oder von außen durch Niederschlag, wie z.B. Regen oder Schnee eindringende Feuchtigkeit wird im Sammelkanal gesammelt und über die Pumpvertiefung abgepumpt, wobei über das ständig sich nachbildende Gemisch aus Flüssigkeit und Pflanzenmaterial eine stetige Abgabe eines Materialstromes aus dem Becken zum Zwecke der Weiterverarbeitung, z.B. in einem Fermenter, ermöglicht wird, während der verbleibende Rest des Materials im Becken gelagert bleibt.

Auf diese Weise wird eine Verrottung des Materials im unteren Bereich verhindert. Zusätzlich kann die Silage durch künstliche Beregnung gefördert werden.

Eine einfach auszuführende Konstruktion und geringe Baukosten lassen sich erreichen, wenn das flüssigkeitsdichte Becken als Erdbecken ausgebildet ist. Durch Aufbringen einer Kunststoff-Dichtschicht in einer Erdgrube kann die Flüssigkeitsdichtheit relativ einfach erzielt werden. Bei der Realisierung des flüssigkeitsdichten Beckens als Erdbecken können die Beckenwände und die Beckensohle mit einer aus Dichtmaterialbahnen zusammengeschweißten Dichtungsschicht abgedeckt sein.

Eine weitere Ausführungsform der Erfindung kann darin bestehen, dass das Becken im Wesentlich rechteckförmig ausgebildet ist und der zumindest eine Sammelkanal in Längsrichtung des Beckens verläuft. Die sich im Becken ansammelnde Flüssigkeit kann somit entlang der Länge des Beckens ständig in die Pumpvertiefung abfließen.

Um eine symmetrische Gestaltung der erfindungsgemäßen Vorrichtung zu ermöglichen, kann der zumindest eine Sammelkanal mittig angeordnet sein, so dass eine gleichmäßige Flüssigkeitsaufnahme von beiden Längsseiten des Sammelkanals gewährleistet ist.

Um eine zu rasche Ableitung der im Sammelkanal aufgenommenen Flüssigkeit zu verhindern, kann der zumindest eine Sammelkanal kein Gefälle oder ein Gegengefälle in Richtung zur Pump-Vertiefung aufweisen. Dadurch kommt es zu einem Rückstau, der die ständige Bildung eines Gemisches aus von oben nachrückendem Pflanzenmaterial und der im Sammelkanal vorhandenen Flüssigkeit zur Folge hat.

Zum Zwecke der einfach durchzuführenden Wartung einer für das Abpumpen verwendeten Pumpvorrichtung kann gemäß einer Ausführungsform der Erfindung die Pump-Vertiefung im Bereich von einem der Längsenden des Beckens angeordnet sein.

Um die innerhalb des Pflanzenmaterials auftretende Flüssigkeit besser in den Sammelkanal abzuleiten, kann gemäß einem weiteren Ausführungsbeispiel der Erfindung die Beckensohle zu beiden Längsseiten des zumindest einen Sammelkanals bzw. der Pump-Vertiefung ein Gefälle quer zur Längsrichtung aufweisen.

Das Abpumpen der in der Pumpvertiefung sich ansammelnden Flüssigkeit kann über eine Pumpvorrichtung geschehen, deren Auslassleitung über den Beckenrand geführt ist.

Weiters kann in der Pumpvertiefung eine Tauchpumpe angeordnet sein, die entlang einer in der Pumpvertiefung angeordneten Stütze vertikal bewegbar ist, und wobei ein Bediensteg vorgesehen ist, der auf der Stütze und am Beckenrand aufgelagert ist. Auf diese Weise kann die Pumpe vom Bediensteg aus gewartet und bedient werden. Die Auslassleitung kann wiederum über die Stütze und den Bediensteg nach außen geführt sein.

Zur Förderung von Pflanzenmaterial im Sammelkanal kann eine Wasser-Spülleitung vorgesehen sein, die in den Sammelkanal einmündet.

Um das Durchspülen über die volle Länge des Sammelkanals zu erleichtern, ist es vorteilhaft, wenn die Wasser-Spülleitung an dem der Pumpvertiefung gegenüberliegenden Ende des Sammelkanals in diesen einmündet.

Gemäß einer anderen Ausführungsform der Erfindung kann eine Förderschnecke vorgesehen sein, die mit ihrem Eingang in die Pumpvertiefung ragt und deren Ausgang am Beckenrand angeordnet ist, wobei die Förderschnecke Fördergut aus der Pumpvertiefung zur Beckenkrone bewegt, wo entweder eine weitere Pumpe oder der Eingang einer weiteren Förderschnecke vorgesehen ist, über die das Fördergut aus dem Becken förderbar ist. Die Förderschnecke ermöglicht einen höheren Förderdurchsatz im Vergleich zur Förderung des Materials mittels Pumpe. Weitere Vorteile sind die auf einfache Art und Weise durchführbare Wartung der Förderschnecke und deren einfache Entnahme aus dem Becken.

Ein weiteres Ausführungsbeispiel der Erfindung kann darin bestehen, dass weitere Spülleitungen vorgesehen sind, die mit ihren voneinander beabstandeten Enden im Bereich der Längsseiten des Beckenrandes einmünden, um Pflanzenmaterial in den Sammelkanal oder in die Pumpvertiefung zu spülen. Auf diese Weise kann der Materialtransport aus dem Becken erhöht werden, weil das Material rascher in den Sammelkanal gelangt.

Nachfolgend wird die Erfindung anhand der in den Zeichnungen dargestellten Ausführungsbeispiele eingehend erläutert. Es zeigt dabei
Fig.1 eine Draufsicht auf eine Ausführungsform der erfindungsgemäßen Vorrichtung;
Fig.2 einen Schnitt AA quer zur Längsrichtung der Vorrichtung gemäß Fig.1;
Fig.3 einen teilweisen Schnitt BB in Längsrichtung der Vorrichtung gemäß Fig.1;
Fig.4 einen Schnitt CC quer zur Längsrichtung der Vorrichtung gemäß Fig.1;
Fig.5 eine Draufsicht auf eine weitere Ausführungsform der erfindungsgemäßen Vorrichtung;
Fig. 6 einen teilweisen Schnitt BB in Längsrichtung der Vorrichtung gemäß Fig.5 und
Fig.7 eine Draufsicht auf eine weitere Ausführungsform der erfindungsgemäßen Vorrichtung.

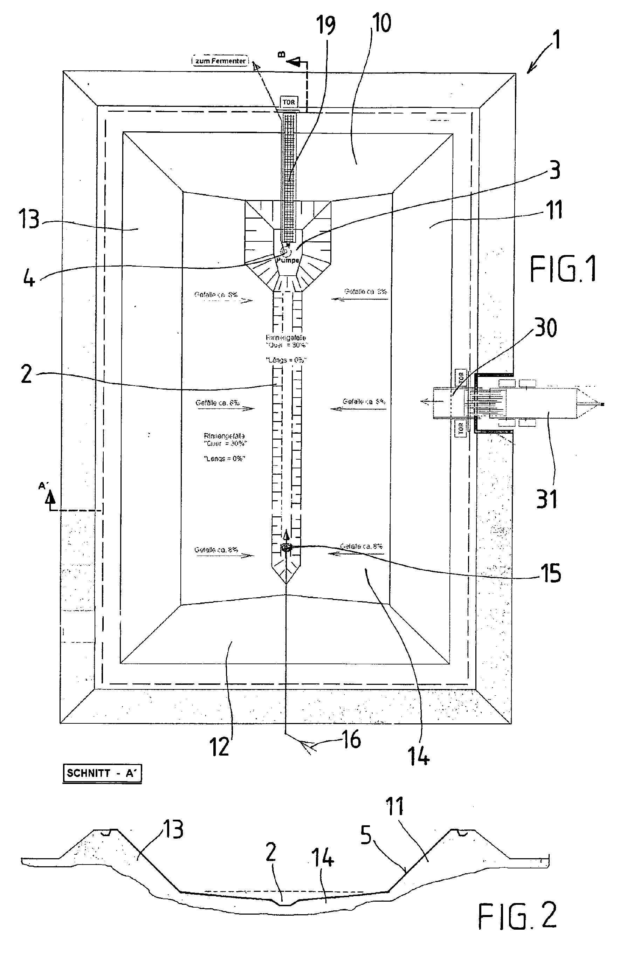

Fig.1 bis 4 zeigen eine Vorrichtung zur Silierung von Pflanzenmaterial, z.B. Zuckerrüben, die erfindungsgemäß ein im Wesentlichen rechteckiges Erdbecken 1 umfasst, das eine Beckensohle 14 aufweist, die von Beckenwänden 10, 11, 12, 13 umgeben ist. Das Erdbecken 1 weist keine Abdeckung auf und ist somit gegen Niederschlag wie Regen oder Schnee nicht geschützt.

Die Beckensohle 14 und die schräg abfallenden Beckenwände 10, 11, 12 und 13 sind mit einer Dichtungsschicht 5 abgedeckt, die z.B. aus dicht miteinander verschweißten Polypropylenfolienbahnen gebildet sein kann. Die Dichtungsschicht 5 ist an ihrem oberen Ende an der Beckenkrone umgeschlagen und fixiert.

Erfindungsgemäß ist weiters in der Beckensohle 14 ein nach oben hin offener, rinnenförmiger Sammelkanal 2 vorgesehen, der in Längsrichtung des Erdbeckens 1 verläuft und in eine Pump-Vertiefung 3 mündet, aus welcher dort sich ansammelndes Gemisch aus Flüssigkeit und Planzenmaterial zur Weiterverarbeitung außerhalb des Erdbeckens 1 abpumpbar ist. Die Form und die Anzahl der angebrachten Sammelkanäle kann im Rahmen der Erfindung variieren. Fig.2 zeigt das Profil der Beckenwände 11, 13 und der dazwischen liegenden Beckensohle 14 mit dem Sammelkanal 2. Die Beckenkrone ist durch einen umlaufenden Erdwall gebildet.

Der Sammelkanal 2 ist mittig im Erdbecken 1 angeordnet und weist, z.B. kein oder ein leichtes Gegen(Konter)gefälle in Richtung zur Pump-Vertiefung 3 auf, die im Bereich eines Längsendes des Erdbeckens 1 angeordnet ist, damit die Flüssigkeit im Sammelkanal 2 nicht schnell abläuft und dann abgepumpt wird - was zur Folge hätte, dass sich Feststoffe absetzen würden - sondern sich ein Flüssigkeitsrückstau ausbildet, in welchem ständig von oben nachrückendes Pflanzenmaterial in der Flüssigkeit in Form von Schwebstoffen weiterbewegt wird, die breiartig zur Pump-Vertiefung 3 gelangen, von wo sie aus dem Becken 1 gepumpt werden.

Weiters weist die Beckensohle 14 zu beiden Längsseiten des Sammelkanals 2 bzw. der Pump-Vertiefung 3 ein Gefälle, z.B. 8%, quer zur Längsrichtung auf.

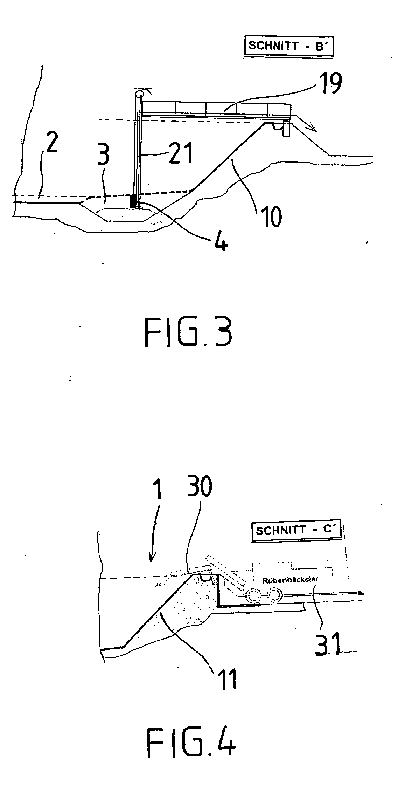

In der Pumpvertiefung 3 ist eine Tauchpumpe 4 angeordnet, die entlang einer in der Pumpvertiefung 3 angeordneten Stütze 21 (Fig.3) vertikal bewegbar ist. Die Stütze 21 ist auf einem Betonfundament innerhalb der Pumpvertiefung 3 abgestützt. Zur Wartung und Bedienung der Tauchpumpe 4 ist ein Bediensteg 19 vorgesehen, der auf der Stütze 21 und am gegenüberliegenden Beckenrand aufgelagert ist. Die Auslassleitung der Tauchpumpe 4 ist entlang der Stütze 21 und dem Bediensteg 19 geführt (Pfeil). Die Tauchpumpe 4 ist vorzugsweise auf einer solchen Höhe innerhalb der Pumpvertiefung 3 angeordnet, dass ihr Einlass weder ganz auf dem Grund noch auf der Höhe des Flüssigkeitsspiegels angeordnet ist, um möglichst viele Schwebstoffe innerhalb der Flüssigkeit von der Tauchpumpe 4 einzusaugen.

Über eine Wasser-Spülleitung 16, die an dem der Pumpvertiefung 3 gegenüberliegenden Ende des Sammelkanals 2 in diesen einmündet, kann der Sammelkanal 2 durchgespült werden, um Pflanzenmaterial in Richtung Pumpvertiefung 3 zu fördern.

Während des Betriebs der erfindungsgemäßen Vorrichtung wird das zu silierende Pflanzenmaterial, z.B. von einem Rübenhäcksler 31 (Fig.1, 4) in Form von Schnetzeln über eine Rutsche 30 in das Erdbecken 1 gefördert und dort unter Ausbildung eines (nicht dargestellten) Schüttkegels aufgehäuft.

Die erforderliche Verdichtung und der luftdichte Abschluss des Pflanzenmaterials kommt durch das Eigengewicht des aufgehäuften Materials zustande. Durch die auf diese Weise in Gang gesetzte Milchsäuregärung entsteht das konservierte Pflanzenmaterial, das gegen Verrotten dadurch geschützt ist, dass über den Sammelkanal 2 die gesamte anfallende Flüssigkeit abgeführt und in der Pumpvertiefung 3 abgesaugt wird. Durch regelmäßiges Spülen mittels der Spülleitung 16 wird ein Materialstau im Sammelkanal 2 verhindert.

Durch die Konservierung des Pflanzenmaterials kann dieses für einige Zeit, z.B. 3 bis 4 Monate, zwischengelagert werden, während Teile davon einer Verwertung z.B. in einer Biogasanlage ständig zugeführt wird.

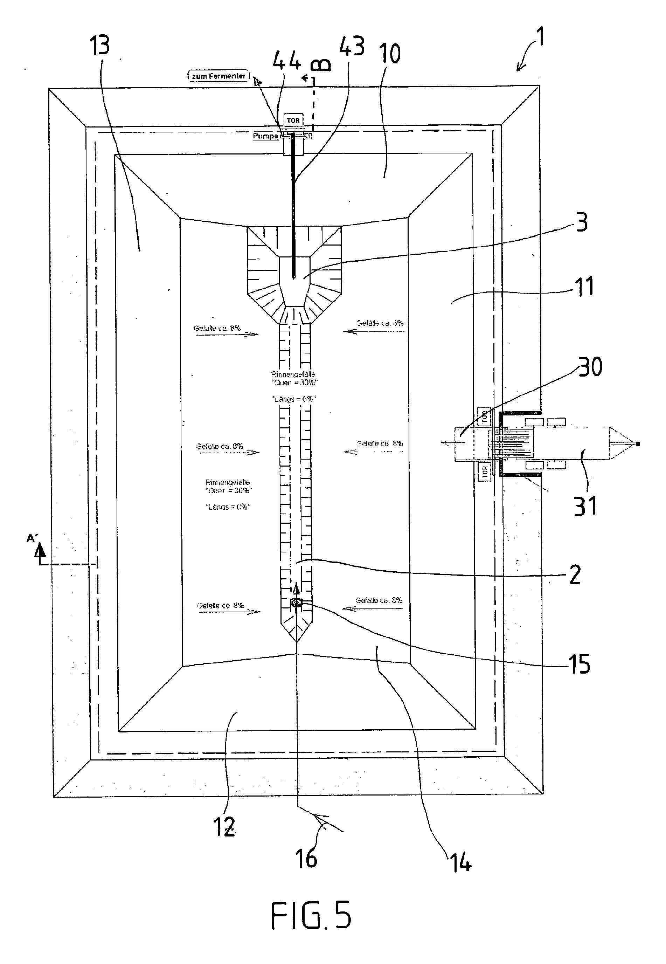

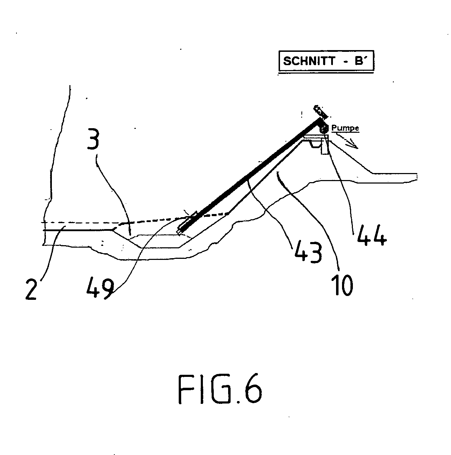

Gemäß dem in Fig.5 und 6 gezeigten Ausführungsbeispiel mündet eine Rohr-/Trogschnecke 43 mit ihrem Eingang in der Pumpvertiefung 3 und fördert das aus dem Sammelkanal 2 angeschwemmte Pflanzenmaterial entlang der Beckenwand 10 schräg nach oben zur Beckenkrone. Sie mündet dort mit ihrem Ausgang zur Übergabe des Fördergutes zwecks Weiterbeförderung in eine weitere Pumpe 44.

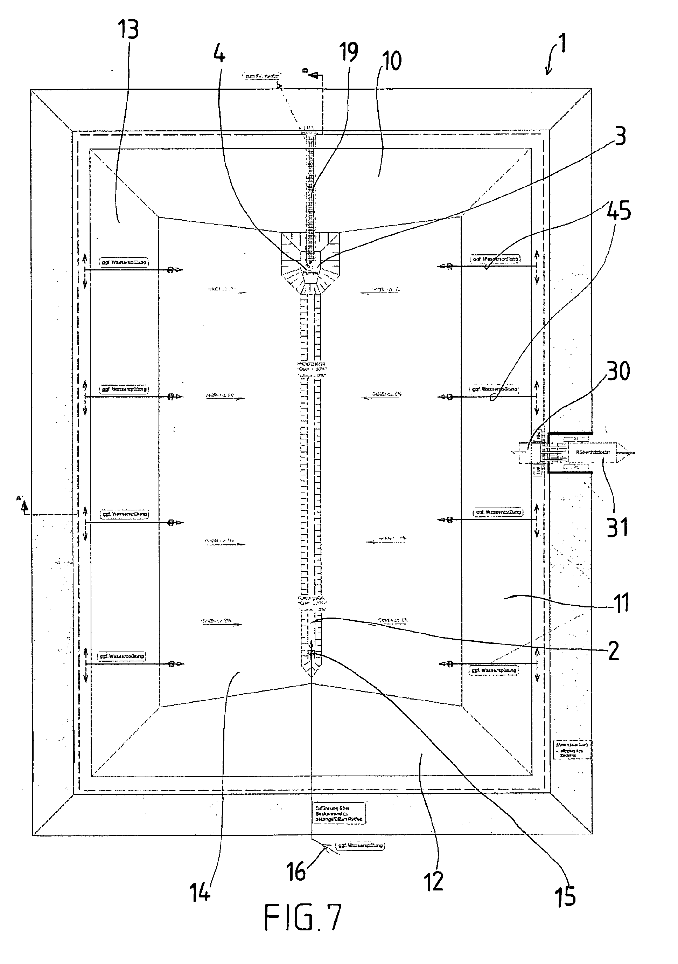

Gemäß dem in Fig.7 gezeigten Ausführungsbeispiel sind weitere Spülleitungen 45 vorgesehen, die mit ihren voneinander beabstandeten Enden im Bereich der Längsseiten des Beckens 1 einmünden, um aus dem gelagerten Pflanzenmaterial mittels Wasser Substrat in den Sammelkanal 2 oder in die Pumpvertiefung 3 zu spülen oder zu fördern. Die Flüssigkeitszufuhr über die Spülleitungen 45 kann dabei über Stellschieber gesteuert sein.

## Patentansprüche

1. Vorrichtung zur Silierung von Pflanzenmaterial, **dadurch gekennzeichnet, dass** ein flüssigkeitsdichtes Becken (1) mit einer Beckensohle (14) und Beckenwänden (10, 11, 12, 13) vorgesehen ist, und dass in der Beckensohle (14) zumindest ein nach oben hin zumindest teilweise offener Sammelkanal (2) vorgesehen ist, der in eine Pump-Vertiefung (3) mündet, aus welcher dort sich ansammelndes Gemisch aus Flüssigkeit und Planzenmaterial abpumpbar bzw. förderbar ist.

2. Vorrichtung nach Anspruch 1, **dadurch gekennzeichnet, dass** das flüssigkeitsdichte Becken ein Erdbecken ist.

3. Vorrichtung nach Anspruch 1 oder 2, **dadurch gekennzeichnet, dass** der zumindest eine Sammelkanal (2) in Längsrichtung des Beckens (1) verläuft.

4. Vorrichtung nach Anspruch 1, 2 oder 3, **dadurch gekennzeichnet, dass** der zumindest eine Sammelkanal (2) mittig angeordnet ist.

5. Vorrichtung nach einem der Ansprüche 1 bis 4, **dadurch gekennzeichnet, dass** der zumindest eine Sammelkanal (2) kein Gefälle oder ein Gegengefälle in Richtung zur Pump-Vertiefung (3) aufweist.

6. Vorrichtung nach einem der Ansprüche 1 bis 5, **dadurch gekennzeichnet, dass** die Pump-Vertiefung (3) im Bereich von einem der Längsenden des Beckens (1) angeordnet ist.

7. Vorrichtung nach einem der Ansprüche 1 bis 6, **dadurch gekennzeichnet, dass** die Beckensohle (14) zu beiden Längsseiten des zumindest einen Sammelkanals (2) bzw. der Pump-Vertiefung (3) ein Gefälle quer zur Längsrichtung aufweist.

8. Vorrichtung nach einem der Ansprüche 1 bis 7, **dadurch gekennzeichnet, dass** in der Pumpvertiefung (3) eine Tauchpumpe (4) angeordnet ist, die entlang einer in der Pumpvertiefung (3) angeordneten Stütze (21) vertikal bewegbar ist, und dass ein Bediensteg (19) vorgesehen ist, der auf der Stütze (21) und am Beckenrand aufgelagert ist.

9. Vorrichtung nach einem der Ansprüche 1 bis 7, **dadurch gekennzeichnet, dass** eine Förderschnecke (43) vorgesehen ist, die mit ihrem Eingang in die Pumpvertiefung (3) ragt und deren Ausgang an der Beckenkrone angeordnet ist, wobei die Förderschnecke (43) Fördergut aus der Pumpvertiefung (3) zur Beckenkrone bewegt, wo entweder eine weitere Pumpe (44) oder der Eingang einer weiteren Förderschnecke vorgesehen ist, über die das Fördergut aus dem Becken (1) förderbar ist.

10. Vorrichtung nach einem der Ansprüche 1 bis 9, **dadurch gekennzeichnet, dass** eine Wasser-Spülleitung (16) vorgesehen ist, die in den Sammelkanal (2) einmündet.

11. Vorrichtung nach Anspruch 10, **dadurch gekennzeichnet, dass** die Wasser-Spülleitung (16) an dem der Pumpvertiefung (3) gegenüberliegenden Ende des Sammelkanals in diesen einmündet.

12. Vorrichtung nach einem der vorhergehenden Ansprüche 1 bis 11, **dadurch gekennzeichnet, dass** weitere Spülleitungen (45) vorgesehen sind, die mit ihren voneinander beabstandeten Enden im Bereich der Längsseiten des Beckens einmünden, um Pflanzenmaterial in den Sammelkanal (2) oder in die Pumpvertiefung (3) zu spülen.

13. Vorrichtung nach einem der Ansprüche 1 bis 12, **dadurch gekennzeichnet, dass** die Beckenwände (10, 11, 12, 13) und die Beckensohle (14) mit einer Dichtungsschicht (5) abgedeckt sind.
